# EUROPEAN PATENT SPECIFICATION

(11) **EP 1 259 031 B1**
(45) Date of publication and mention of the grant of the patent: **27.07.2005**
(21) Application number: 02005776.6
(22) Date of filing: 13.03.2002
(51) Int. Cl.: H04L 12/28, H04L 29/06, G06F 9/445, G05B 19/04

(54) **Home appliance protocol upgrading method**
Aktualisierungsverfahren von Heimgeräteprotokollen
Méthode de mise à jour de protocoles d'appareils domestiques

(30) Priority: 14.05.2001 KR 2001026100
(43) Date of publication of application: 20.11.2002
(73) Proprietor: LG Electronics Inc., Seoul 150-010 (KR)
(72) Inventor: Lee, Sang Kyun, Kwangmyung-si, 423-030 Kyungki-do (KR); Oh, Ki Tae, Kwangmyung-si, 423-030 Kyungki-do (KR); Lee, Yeon Kyung, Koyang-si, 412-220 Kyungki-do (KR); Kim, Chang Ho, Kangdong-ku, Seoul 134-021 (KR)
(74) Representative: TER MEER STEINMEISTER & PARTNER GbR

(56) References cited:
- EP-A- 0 848 341
- EP-A- 0 926 862
- EP-A- 0 989 713
- WO-A-00/17749
- US-A- 5 440 632

## Description

### BACKGROUND OF THE INVENTION

### Field of the Invention

The present invention relates to a method for upgrading a protocol of a networkable home appliance, and more particularly to a method for upgrading a protocol of a home appliance which is manufactured for use in a home network so as to be communicatable through a gateway connected to an external communication network and has a flash memory for storing the protocol, wherein the protocol stored in the flash memory is upgraded with a new version thereof.

### Description of the Related Art

With the development of Internet networks, recently, most home appliances have been made to be of a multitask type having additional functions as well as their original functions. For example, some home appliance products may be equipped with local area network (LAN) cards or modems such that they are communicatably connected to communication networks. Such home appliance products may be upgraded in version through transmission and reception of data over communication networks or controlled in operation at any communicatable places outside of their installed places.

Generally, a communication device is provided in a home to transfer signals between home appliances and transmit and receive those signals via a communication cable. In this regard, for the purpose of gaining access to a specific home to control home appliances therein, an external remote system must be connected to a communication device in the specific home through a communication connection service provided by an Internet service provider (ISP), to transmit and receive various data to/from the home appliances. In some cases, programs or protocols used in the home appliances may be upgraded in the data transmission and reception procedures.

However, because home appliances are different in replacement time according to users' tastes, fashions, products' lifetimes and so forth, protocols for transmission and reception of signals such as program data may not be the same between products being newly introduced to the market and old ones. For this reason, the transmission and reception of data may be impossible between products, even those of the same manufacturer, thereby making it hard to smoothly operate a home network.

In order to solve the above problem, old products must be replaced with ones being newly introduced to the market, or a read only memory (ROM) or flash ROM of each home appliance having a protocol of the home appliance stored therein must be replaced directly with a new one. In this case, a user of each home appliance deals with the trouble of checking a protocol whenever a new product comes into the market. In particular, the replacement of an old product with a new one increases an economic burden on the user.

A method for updating web terminals at which the present invention relates is described in the EP 0 989 713 A2. The web terminals are coupled to the internet. The user may access a webpage having the updates, patches etc. A check for consistency is made before the updating process is performed. The check of consistency includes the check of memory space or required resources. After successfully checking the requirements the download is performed. The existence of the new software at a certain position in the memory is marked.

A further method for automatically updating firmware of subscriber peripherals is disclosed in WO 00/17749 A. It is automatically determined if the firmware in a peripheral device needs to be updated. The memory used for storing the firmware includes two portions, wherein each portion is configured to store the firmware update. A version string is written into the memory. Further a checksum value is transmitted, whereas the base station, which serves as gateway or peripheral device, generates also a checksum value according to the firmware written into the memory portion. This checksum values are compared and a pass or fail status is generated. In dependency of the status a flag is set to indicate the successfully updating of the firmware.

EP 0848341 A2 discloses a remote upgrade of software over a network. Web TV clients are coupled via a modem pool, which serves as a gateway to the internet, wherein a web TV server is connected to the internet having services (updates) for the web TV Clients. Each Client can be connected to the server. The download is performed upon a reset command in case of an error or if a download request has been found in the memory. The size of the download is transmitted before the update-data is transmitted.

A software downloading system is described in EP 0 926 862 A2. The system includes a transmitting section and a receiving section. The receiving section is embodied in a receiving apparatus, which needs to be updated. Judgement information is transmitted by the transmitter to the receiver to allow the receiver to judge the success/failure in the downloading of software.

US 5,440,632 A disclose a reprogrammable subscriber terminal, which includes control program code of its controller processor modified by downloading new program code. There are different memory areas, which allow updating only parts of the memory. The subscriber is receives a download program code parameter, including the number of expected download program code transactions required to complete the control code modification, the memory space areas and the channel used for the download program code. These parameters are used by the boot section of the receiving device to receive the download program code.

### SUMMARY OF THE INVENTION

Therefore, the present invention has been made in view of the above problems, and it is an object of the present invention to provide a method for upgrading a protocol of a home appliance which is manufactured for use in a home network so as to be communicatable through a gateway connected to an external communication network and has a flash memory for storing the protocol, wherein the protocol stored in the flash memory is automatically upgraded with a new version thereof simply and conveniently without waste of time and manpower.

In accordance with the present invention, the above and other objects can be accomplished by the provision of a method for upgrading an existing protocol of at least one networkable home appliance, comprising the steps of :
a) updating the existing protocol of said home appliance with a new-version protocol and stor-ing the updated new-version protocol in a service provision server; b-1) determining whether a user of said home appliance desires to download said new-version protocol; and c-1) determining whether said existing protocol of said home appliance can be upgraded with said new-version protocol; wherein this determining includes the step of comparing a size of a spare area of a protocol storage memory of said home appliance with a data size of said new-version protocol and, if the size of the spare area of said memory is greater than the data size of said new-version protocol, determining that said existing protocol of said home appliance can be upgraded with said new-version protocol; b-2) downloading said new-version protocol from said service provision server to a gateway connected to said home appliances, if it is determined at said step b-1) that the user desires to download said new-version protocol; allowing said home appliance to notify said gateway of an upgrade start address of a protocol storage memory thereof; and if it is determined at said step c-1) that said existing protocol of said home appliance can be upgraded with said new-version protocol; c-2-1) sequentially writing a version name of said new-version protocol, random data and confirmation data into said protocol storage memory beginning with said upgrade start address, said random data being data randomly extracted from said new-version protocol, said confirmation data having the same size as that of said random data; and c-2-2) writing said new-version protocol into said protocol storage memory beginning with an address subsequent to a written address of said confirmation data; wherein said upgrade start address of said protocol storage memory is spaced apart from a written address of said existing protocol by certain addresses such that said existing protocol and said new-version protocol are together stored in said memory.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram showing the construction of a networkable home appliance system to which the present invention is applied;
Figs. 2a and 2b are flow charts illustrating a method for upgrading a protocol of a networkable home appliance in accordance with the present invention;
Fig. 3 is a view showing a data arrangement of a flash memory installed in the home appliance; and
Fig. 4 is a flow chart illustrating a procedure of processing communication data in the home appliance.

### DESCRIPTION OF THE PREFERRED EMBODIMENTS

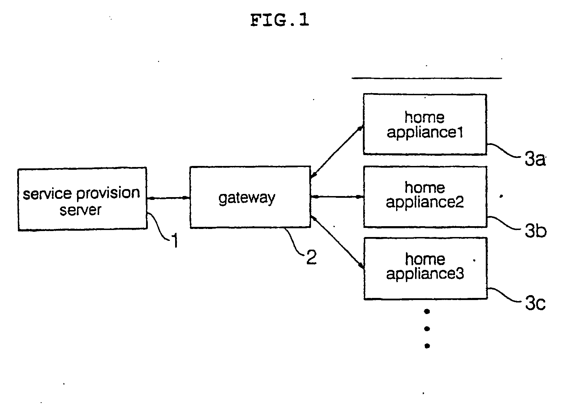

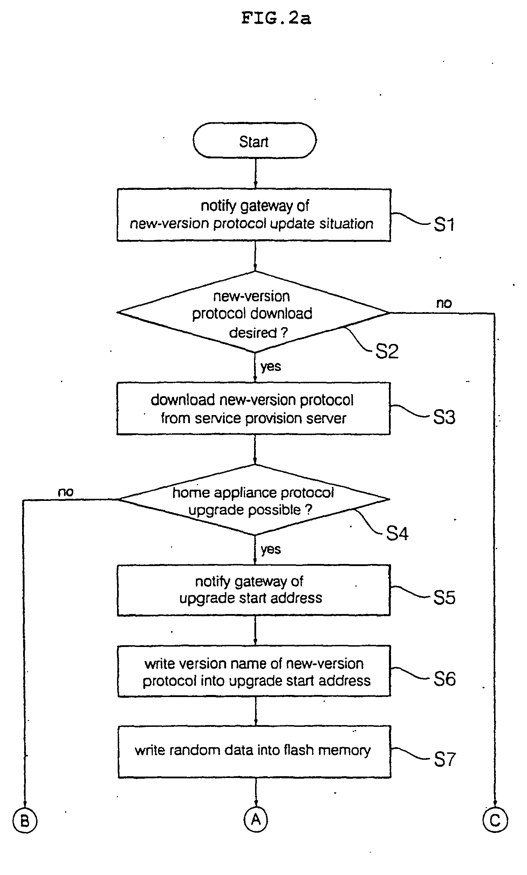

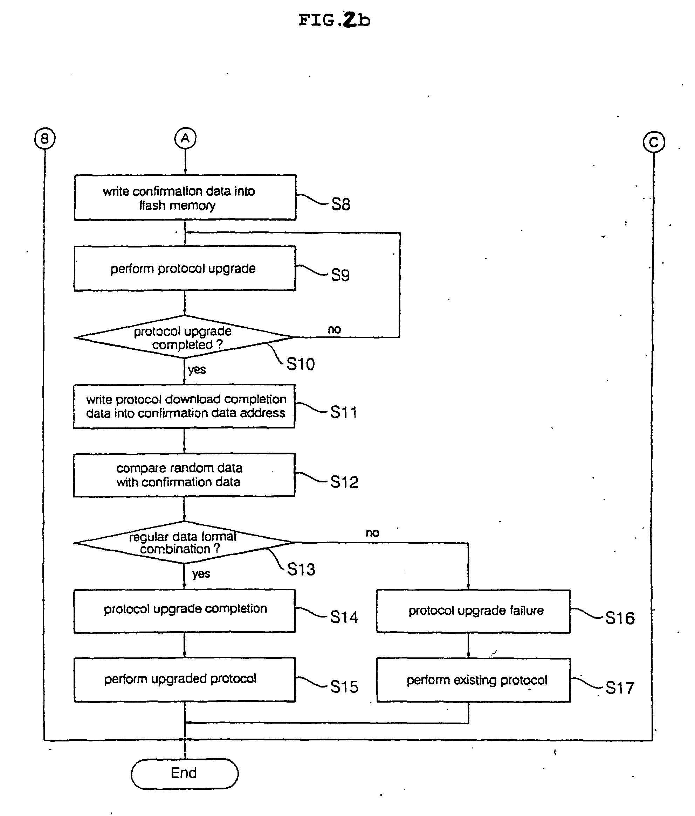

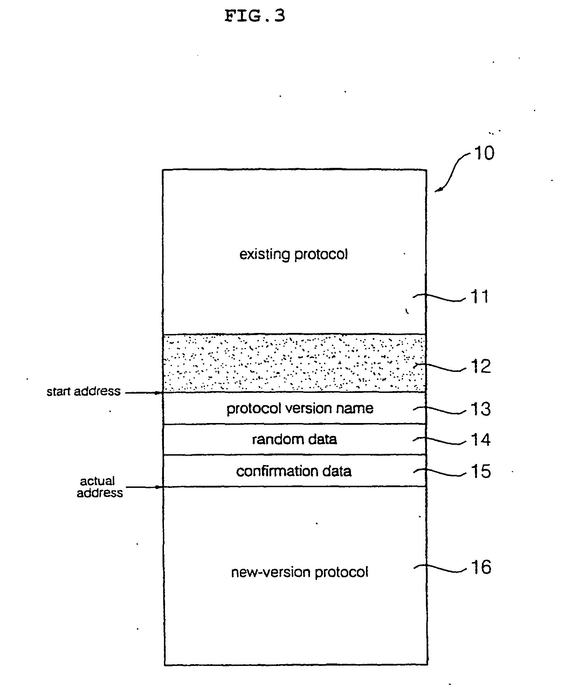

Fig. 1 is a block diagram showing the construction of a networkable home appliance system to which the present invention is applied, Figs. 2a and 2b are flow charts illustrating a method for upgrading a protocol of a networkable home appliance in accordance with the present invention, and Fig. 3 is a view showing a data arrangement of a flash memory installed in the home appliance.

In a preferred embodiment of the present invention, a protocol or operating program of a home appliance is stored and upgraded in a flash memory. Alternatively, the protocol or operating program may be stored and upgraded in any other memory as long as this memory is appropriate to the object and operation of the invention.

First, a description will hereinafter be given of the home appliance protocol upgrading method according to the present invention with reference to Fig. 2. First, if an existing protocol 11 stored in a service provision server 1 is updated with a new-version protocol 16, then the server 1 notifies a gateway 2 connected to networkable home appliances 3a, 3b and 3c installed in each home of such a situation at the first step S1. In the present embodiment, the service provision server 1 stores product information, product Internet protocol (IP) variation information, upgraded data relating to each product, a protocol, etc. to remotely control the networkable home appliances 3a, 3b and 3c.

Upon receiving the protocol update notification from the service provision server 1 at the above first step S1, the gateway 2 determines at the second step S2 whether a user desires to download the new-version protocol 16 from the server 1. If it is determined at the second step S2 that the user does not desire to download the new-version protocol 16, the existing protocol 11 is used continuously without downloading the new-version protocol 16.

On the other hand, in the case where it is determined at the above second step S2 that the user desires to download the new-version protocol 16, the gateway 2 downloads the protocol 16 from the service provision server 1 at the third step S3.

After downloading the new-version protocol 16 at the above third step S3, the gateway 2 instructs each of the networkable home appliances 3a, 3b and 3c in the home to determine whether it can upgrade the existing protocol 11 with the new-version protocol 16, at the fourth step S4.

In the present embodiment, whether the protocol upgrade is possible can be determined on the basis of the comparison between the size of a spare area of a flash memory 10 contained in each of the home appliances 3a, 3b and 3c and the size of the new-version protocol 16. If the spare area of the flash memory 10 is greater in size than the new-version protocol 16, the protocol upgrade is determined to be possible.

The flash memory 10 stores both of the existing protocol 11 for networking of the home appliances 3a, 3b and 3c and the new-version protocol 16, between which is defined a shared area 12.

In the case where the protocol upgrade is determined to be possible at the above fourth step S4, each of the home appliances 3a, 3b and 3c notifies the gateway 2 of an upgrade start address of the flash memory 10 at the fifth step S5, and the gateway 2 sends a packet containing a version name 13 of the new-version protocol to each home appliance at the sixth step S6 to instruct it to write the version name 13 into the upgrade start address notified at the fifth step S5.

After writing the protocol version name 13 at the above sixth step S6, the gateway 2 writes random data 14 into the flash memory 10 at the seventh step S7 and then confirmation data 15 having the same size as that of the random data 14 into the flash memory 10 at the eighth step S8.

Note that the above sixth to eighth steps S6 to S8 are steps initially performed for the upgrade of the existing protocol 11 in the flash memory 10 of each of the home appliances 3a, 3b and 3c with the new-version protocol 16 by the gateway 2. That is, before downloading the new-version protocol 16 from the gateway 2, each home appliance downloads the protocol version name 13, the random data 14 for determination about whether the protocol 16 has been correctly downloaded, and the confirmation data 15 having the same size as that of the random data 14. These steps enable the protocol upgrade to be smoothly performed.

At the ninth step S9, the protocol upgrade is performed by downloading the new-version protocol 16 from the gateway 2 and then writing it into the flash memory 10 beginning with an address subsequent to an address where the confirmation data 15 is written at the above eighth step S8. At the tenth step S10, a determination is made as to whether the protocol upgrade has been completed.

If the protocol upgrade is determined not to have been completed at the above tenth step S10, the method returns to the above ninth step S9 to continuously download the new-version protocol 16, Alternatively, in the case where the protocol upgrade is determined to have been completed at the above tenth step S10, the method proceeds to the eleventh step S11 to update the confirmation data 15 written at the above eighth step S8 by writing data indicative of the completion of the protocol download into the address of the confirmation data 15.

At the twelfth step S12, whether the new-version protocol 16 has been normally downloaded and the protocol upgrade has been thus normally performed at the above ninth step is determined by comparing the confirmation data 15 updated at the eleventh step S11 with the random data written at the seventh step S7. At the thirteenth step S13, a determination is made as to whether the comparison at the twelfth step S12 exhibits a regular data format combination.

In the present embodiment, in the normal state, the random data 14 and the confirmation data 15 are the same or are regularly combined to have their formats shifted with respect to each other. In this regard, whether the upgrade of the existing protocol 11 with the new-version protocol 16 has been normally performed can be determined from the comparison between the random data 14 and the confirmation data 15.

Where the comparison is determined to exhibit the regular data format combination at the above thirteenth step S13, the protocol upgrade is regarded as having been correctly completed at the fourteenth step S14, and data is processed among the home appliances 3a, 3b and 3c according to the upgraded new-version protocol 16 at the fifteenth step S15.

However, in the case where the comparison does not exhibit the regular data format combination at the above thirteenth step S13, the protocol upgrade is regarded as being stopped halfway or subject to error occurrence, not having been correctly completed, at the sixteenth step S16, and data is processed among the home appliances 3a, 3b and 3c according to the existing protocol 11 at the seventeenth step S17.

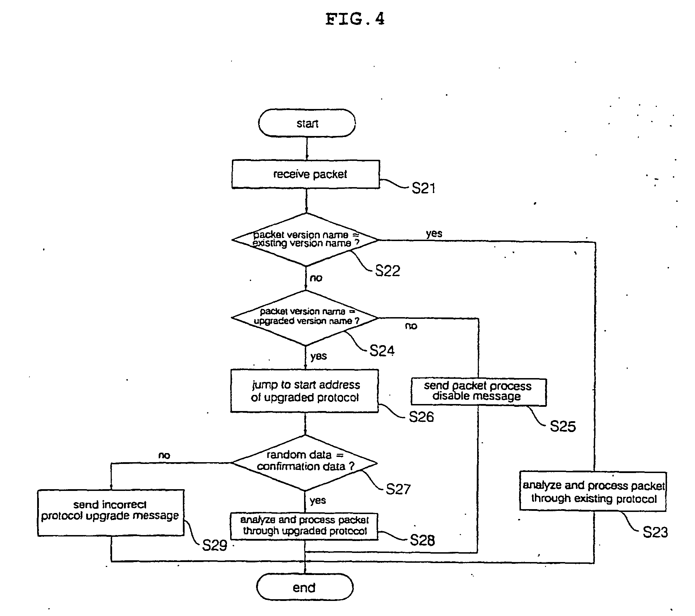

Fig. 4 is a flow chart illustrating a procedure of processing communication data in each home appliance after the protocol upgrade is performed. First, upon receiving a command packet sent from the gateway 2 at the first step S21, each of the home appliances 3a, 3b and 3c analyzes a header of the received packet to determine whether a version name of the received packet is the same as an existing version name at the second step S22.

In the case where it is determined at the above second step S22 that the version name of the received packet is the same as the existing version name, each home appliance analyzes and processes the received packet through the existing protocol 11 at the third step S23.

On the contrary, if the version name of the received packet is not the same as the existing version name at the above second step S22, each home appliance compares it with the version name 13 of the upgraded protocol stored in the flash memory 10 thereof to determine whether they are the same at the fourth step S24.

Upon determining at the above fourth step S24 that the two version names are not the same, each home appliance recognizes that it cannot process the received packet, and then sends a packet process disable message to the gateway at the fifth step S25.

On the other hand, in the case where the two version names are determined to be the same at the fourth step S24, each home appliance recognizes that the received packet must be processed according to the upgraded protocol 16. As a result, each home appliance moves to a start address of the new-version protocol 16 at the sixth step S26, and then determines at the seventh step S27 whether the random data 14 and the confirmation data 15 are the same, so as to determine whether the protocol upgrade has been correctly performed.

Where the random data 14 and the confirmation data 15 are determined to be the same at the above seventh step S27, each home appliance recognizes that the new-version protocol 16 has been stored therein with no error and the existing protocol 11 has been upgraded with the protocol 16. Thus, each home appliance analyzes and processes the packet received at the first step S21 through the upgraded protocol 16 at the eighth step S28.

However, where the random data 14 and the confirmation data 15 are determined not to be the same at the above seventh step S27, each home appliance sends an incorrect protocol upgrade message to the gateway 2 at the ninth step S29.

As apparent from the above description, the present invention provides a method for upgrading a protocol of a home appliance which is manufactured for use in a home network so as to be communicatable through a gateway connected to an external communication network and has a flash memory for storing the protocol, wherein the protocol stored in the flash memory is automatically upgraded with a new version thereof simply and conveniently without waste of time and manpower. According to this invention, the version upgrade of an existing home appliance can be performed without a serviceman's home visit or a user's separate manipulation. Therefore, the invention has the effect of establishing data compatibility between the existing home appliance and a home appliance being newly released to the market.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method for upgrading an existing protocol of at least one networkable home appliance (3a, 3b, 3c), comprising the steps of:
**a)** updating the existing protocol of said home appliance (3a, 3b, 3c) with a new-version protocol and storing the updated new-version protocol in a service provision server (1);
**b-1)** determining whether a user of said home appliance (3a, 3b, 3c) desires to download said new-version protocol; and
**c-1)** determining whether said existing protocol of said home appliance (3a, 3b, 3c) can be upgraded with said new-version protocol; wherein this determining includes the step of comparing a size of a spare area of a protocol storage memory (10) of said home appliance (3a, 3b, 3c) with a data size of said new-version protocol and, if the size of the spare area of said memory (10) is greater than the data size of said new-version protocol (16), determining that said existing protocol (11) of said home appliance (3a, 3b, 3c) can be upgraded with said new-version protocol;
**b-2)** downloading said new-version protocol from said service provision server (1) to a gateway (2) connected to said home appliances (3a, 3b, 3c), if it is determined at said step b-1) that the user desires to download said new-version protocol (S3);
**characterized by**
allowing said home appliance (3a, 3b. 3c) to notify said gateway (2) of an upgrade start address of a protocol storage memory (10) thereof (S5); and if it is determined at said step c-1) that said existing protocol of said home appliance (3a, 3b, 3c) can be upgraded with said new-version protocol;
**c-2-1)** sequentially writing (S6. S7, S8) a version name (13) of said new-version protocol (16), random data (14) and confirmation data (15) into said protocol storage memory (10) beginning with said upgrade start address, said random data (14) being data randomly extracted from said new-version protocol (16), said confirmation data (15) having the same size as that of said random data (14); and
**c-2-2)** writing (S9) said new-version protocol (16) into said protocol storage memory (10) beginning with an address subsequent to a written address of said confirmation data (15);
wherein said upgrade start address of said protocol storage memory (10) is spaced apart from a written address of said existing protocol (11) by certain addresses (12) such that said existing protocol (11) and said new-version protocol (16) are together stored in said memory (10).

2. The method as set forth in claim 1, further comprising the step of:
d) comparing (S12) said random data (14) with said confirmation data (15) after storing said new-version protocol (16), to determine (S13) whether said new-version protocol (16) has been normally written.

## Patentansprüche

1. Verfahren zum Hochrüsten eines vorhandenen Protokolls wenigstens eines in Verbindung mit einem Netz betreibbaren Heimgeräts (3a, 3b, 3c), das die folgenden Schritte umfasst:
a) Aktualisieren des vorhandenen Protokolls des Heimgeräts (3a, 3b, 3c) durch eine neue Version des Protokolls und Speichern der aktualisierten neuen Version des Protokolls in einem Dienstbereitstellungsserver (1);
b-1) Ermitteln, ob ein Anwender des Heimgeräts (3a, 3b, 3c) die neue Version des Protokolls herunterladen möchte; und
c-1) Feststellen, ob das vorhandene Protokoll des Heimgeräts (3a, 3b, 3c) mit der neuen Version des Protokolls hochgerüstet werden kann; wobei diese Feststellung den folgenden Schritt umfasst:
Vergleichen einer Größe eines Reservebereichs eines Protokollablagespeichers (10) des Heimgeräts (3a, 3b, 3c) mit einer Datengröße der neuen Version des Protokolls und, falls die Größe des Reservebereichs des Speichers (10) größer als die Datengröße der neuen Version (16) des Protokolls ist, Feststellen, dass das vorhandene Protokoll (11) des Heimgeräts (3a, 3b, 3c) durch die neue Version des Protokolls hochgerüstet werden kann;
b-2) Herunterladen der neuen Version des Protokolls von dem Dienstbereitstellungsserver (1) an ein Gateway (2), das mit den Heimgeräten (3a, 3b, 3c) verbunden ist, falls im Schritt b-1) festgestellt wird, dass der Anwender die neue Version des Protokolls herunterladen möchte (S3);
**gekennzeichnet durch**
Zulassen (S5), dass das Heimgerät (3a, 3b, 3c) dem Gateway (2) eine Hochrüst-Startadresse seines Protokollablagespeichers (10) meldet; und falls im Schritt c-1) festgestellt wird, dass das vorhandene Protokoll des Heimgeräts (3a, 3b, 3c) mit der neuen Version des Protokolls hochgerüstet werden kann:
c-2-1) sequentielles Schreiben (S6, S7, S8) eines Versionsnamens (13) der neuen Version (16) des Protokolls, von Zufallsdaten (14) und von Bestätigungsdaten (15) in den Protokollablagespeicher (10) beginnend bei der Hochrüst-Startadresse, wobei die Zufallsdaten (14) Daten sind, die aus der neuen Version (16) des Protokolls zufällig extrahiert werden und wobei die Bestätigungsdaten (15) die gleiche Größe wie die Zufallsdaten (14) haben; und
c-2-2) Schreiben (S9) der neuen Version (16) des Protokolls in den Protokollablagespeicher (10) beginnend bei einer Adresse, die einer beschriebenen Adresse der Bestätigungsdaten (15) folgt;
wobei die Hochrüst-Startadresse des Protokollablagespeichers (10) von einer beschriebenen Adresse des vorhandenen Protokolls (11) um bestimmte Adressen (12) beabstandet ist, so dass das vorhandene Protokoll (11) und die neue Version (16) des Protokolls gemeinsam in dem Speicher (10) gespeichert sind.

2. Verfahren nach Anspruch 1, das ferner den folgenden Schritt umfasst:
d) Vergleichen (S12) der Zufallsdaten (14) mit den Bestätigungsdaten (15), nachdem die neue Version (16) des Protokolls gespeichert worden ist, um festzustellen (S13), ob die neue Version (16) des Protokolls normal geschrieben worden ist.

## Revendications

1. Un procédé de mise à niveau d'un protocole existant d'au moins un appareil domestique (3a, 3b, 3c) susceptible d'être mis en réseau, comprenant les étapes consistant à :
a) mettre à jour le protocole existant dudit appareil domestique (3a, 3b, 3c) avec un protocole de nouvelle version et stocker un protocole de nouvelle version mis à jour dans un serveur de fourniture de service (1) ;
b-1) déterminer si un utilisateur dudit appareil domestique (3a, 3b, 3c) souhaite télécharger ledit protocole de nouvelle version ; et
c-1) déterminer si ledit protocole existant dudit appareil domestique (3a, 3b, 3c) peut être mis à niveau avec ledit protocole de nouvelle version ; dans lequel cette détermination comprend l'étape consistant à :
comparer une taille d'une zone de réserve d'une mémoire de stockage de protocole (10) dudit appareil domestique (3a, 3b, 3c) à une taille de données dudit protocole de nouvelle version et, si la taille de la zone de réserve de ladite mémoire (10) est supérieure à la taille de données dudit protocole de nouvelle version (16), déterminer que ledit protocole existant (11) dudit appareil domestique (3a, 3b, 3c) peut être mis à niveau avec ledit protocole de nouvelle version ;
b-2) télécharger ledit protocole de nouvelle version auprès dudit serveur de fourniture de service (1) sur une passerelle (2) connectée auxdits appareils domestiques (3a, 3b, 3c), s'il est déterminé, à ladite étape b-1), que l'utilisateur souhaite télécharger ledit protocole de nouvelle version (S3) ;
**caractérisé par**
le fait de permettre audit appareil domestique (3a, 3b, 3c) de notifier à ladite passerelle (2) une adresse de début de mise à niveau d'une mémoire de stockage de protocole (10) de celle-ci (S5) ; et, s'il est déterminé à ladite étape c-1) que ledit protocole existant dudit appareil domestique (3a, 3b, 3c) peut être mis à niveau avec ledit protocole de nouvelle version ;
c-2-1) écrire séquentiellement (S6, S7, S8) un nom de version (13) dudit protocole de nouvelle version (16), des données aléatoires (14) et des données de confirmation (15) dans ladite mémoire de stockage de protocole (10) en commençant par ladite adresse de départ de mise à niveau, lesdites données aléatoires (14) étant des données ayant été extraites de façon aléatoire dudit protocole de nouvelle version (16), lesdites données de confirmation (15) ayant la même taille de celle desdites données aléatoires (14) ; et
c-2-2) écrire (S9) ledit protocole de nouvelle version (16) dans ladite mémoire de stockage de protocole (10), en commençant par une adresse subséquente à une adresse écrite desdites données de confirmation (15) ;
dans lequel ladite adresse de départ de mise à niveau de ladite mémoire de stockage de protocole (10) est espacée d'une adresse écrite dudit protocole existant (11), de la valeur de certaines adresses (12), de manière que ledit protocole existant (11) et ledit protocole de nouvelle version (16) soient stockés ensemble dans ladite mémoire (10).

2. Le procédé selon la revendication 1, comprenant en outre l'étape de :
d) comparaison (S12) desdites données aléatoires (14) auxdites données de confirmation (15) après le stockage dudit protocole de nouvelle version (16), pour déterminer (S13) si ledit protocole de nouvelle version (16) a été normalement écrit.
